# EUROPÄISCHE PATENTSCHRIFT

(11) **EP 2 277 819 B1**
(45) Veröffentlichungstag und Bekanntmachung des Hinweises auf die Patenterteilung: **25.06.2014**
(21) Anmeldenummer: 10168162.5
(22) Anmeldetag: 01.07.2010
(51) Int. Cl.: B66F 7/06, B62B 3/02, A47B 9/16

(54) **Scherenhubvorrichtung**
Scissor lift device
Dispositif de levage en ciseaux

(30) Priorität: 23.07.2009 DE 102009027972
(43) Veröffentlichungstag der Anmeldung: 26.01.2011
(73) Patentinhaber: Waldner Labor- und Schuleinrichtungen GmbH, 01097 Dresden (DE)
(72) Erfinder: Keibach, Dieter, 88267, Vogt (DE)
(74) Vertreter: Kotitschke & Heurung Partnerschaft mbB

(56) Entgegenhaltungen:
- EP-A1- 0 399 233
- EP-A1- 0 464 290
- DE-A1-102004 016 728
- DE-A1-102005 015 795
- DE-U1- 20 316 058
- DE-U1- 29 605 922
- DE-U1- 29 706 534
- US-A- 1 840 591
- US-A- 3 259 369
- US-A- 3 889 778

## Beschreibung

Die Erfindung betrifft eine Scherenhubvorrichtung nach dem Oberbegriff von Anspruch 1. Eine solche Scherenhubvorrichtung ist bekannt aus der DE 102004 016728.

Eine derartige gattungsgemäße Scherenhubvorrichtung ist beispielsweise aus der DE 39 13 645 C1 bekannt und umfasst unter anderem ein verschiebbares lastaufnehmendes Tragteil, eine mit dem Tragteil verbundene Schereneinrichtung, die mindestens ein Scherenarmpaar mit zwei an einer Gelenkstelle gelenkig verbundenen Scherenarmen aufweist, und eine mit der Schereneinrichtung gekoppelte Hubeinrichtung zur Verschiebung des Tragteils.

Darüber hinaus ist aus der DE 297 06 534 U1 ein Scherenhubtisch bekannt, der insbesondere als ein Flachhebetisch ausgebildet ist und zwischen einem bodenseitigen Unterrahmen und einer oberen Tischplattform zumindest ein Paar in einem Kreuzungsgelenk miteinander verbundene Scherenarme aufweist. Einer der Scherenarme ist an dessen Endbereich über ein Schwenklager an dem bodenseitigen Unterrahmen gelagert, wobei der andere Scherenarm mit dessen Endbereich über ein Loslager an dem bodenseitigen Unterrahmen abgestützt ist. Dabei sind die Scherenarme mittels zumindest einer Stellvorrichtung in unterschiedliche Hubstellungen verlagerbar. Der aus der DE 297 06 534 U1 bekannte Scherenhubtisch ist insbesondere derart ausgestaltet, dass die Stellvorrichtung randseitig zur Tischplattform angeordnet ist und sich mit einer vertikalen Stützachse über die Tischplattform hinaus erstreckt.

Ferner ist aus der US 3 259 369 A eine Lasthebevorrichtung bekannt, die eine Rahmenstruktur umfasst, an der eine Schereneinrichtungsanordnung zum Verschieben eines lastaufnehmenden Tragteils angebracht ist. Zur Betätigung der Schereneinrichtungsanordnung zur Anhebung des Tragteils ist ein Betätigungsmechanismus in einem durch die Schereneinrichtungsanordnung gebildeten Parallelogramm, das durch zwei benachbarte Scherenarmpaare gebildet wird, vorgesehen.

Des Weiteren ist aus der DE 296 05 922 U1 eine Hebeeinrichtung mit einer höhenverstellbaren Plattform, die insbesondere als Hebeeinrichtung für Behindertenfahrzeuge ausgeführt sein kann, bekannt, wobei zum Anheben und Absenken von Behindertenfahrzeugen, wie beispielsweise eines Rollstuhls, ein Scherensystem unterhalb der Plattform als Stützsystem und ein Hubantrieb neben der Plattform befindet. Dabei kann der Hubantrieb elektrisch oder mechanisch ausgeführt sein und insbesondere in Form einer Gewindespindel ausgestaltet sein.

Darüber hinaus ist aus der US 1 840 591 A eine Hebevorrichtung für Kraftfahrzeuge bekannt, welche ein lastaufnehmendes Tragteil und eine mit dem Tragteil verbundene Schereneinrichtung zur Stützung des Tragteils aufweist.

Weiterhin sind aus dem Stand der Technik als Scherenhubtische ausgebildete Scherenhubvorrichtungen bekannt, bei denen das Tragteil beispielsweise als eine Tischplatte ausgebildet ist und bei denen als Stellantrieb bzw. Hubeinrichtung insbesondere ein Hubzylinder vorgesehen ist, der mit einer Kraft an zumindest einem Gelenk zweier benachbarter Scherenarmpaare einer Schereneinrichtung angreift, um die Winkelstellung der entsprechenden Scherenarme zueinander und so das Höhenniveau einer Tischfläche des Scherenhubtisches zu verändern. Die Hubrichtung des Hubzylinders verläuft dabei senkrecht zur Verschiebungsrichtung der Tischfläche, d.h. der Hubzylinder bringt auf das Gelenk der benachbarten Scherenarmpaare eine resultierende Kraft auf, deren Kraftrichtung senkrecht zur Verschiebungsrichtung der Tischfläche ist. Zur seitlichen Stabilisierung des Scherenhubtischs sind zumindest einige Scherenarmpaare üblicherweise in Querrichtung miteinander verbunden, wodurch ein "Überfahren" der Scherenhubvorrichtung, insbesondere der Schereneinrichtung, nicht möglich ist.

Ist die Tischfläche eines solchen Scherenhubtisches mit einer Last beschwert, ist der Kraftaufwand, den der Hubzylinder insbesondere beim Anheben der Tischfläche aus einer unteren Endstellung der Tischfläche aufbringen muss, erfahrungsgemäß hoch. Die Folge ist, dass der Hubzylinder und die damit verbundenen kraftaufnehmenden Komponenten des Scherenhubtisches entsprechend hoch dimensioniert sein müssen, was wiederum der Kompaktheit der gesamten Anordnung abträglich ist.

Der Erfindung liegt daher die Aufgabe zugrunde, eine Scherenhubvorrichtung anzugeben, bei der eine Hubbewegung mit im Vergleich zum Stand der Technik geringerem Kraftaufwand möglich ist. Weiterhin besteht eine Aufgabe der Erfindung darin, eine Scherenhubvorrichtung anzugeben, bei der zusätzlich auf Querverbindungen zwischen Scherenarmpaaren verzichtet werden kann.

Diese Aufgabe wird durch eine Scherenhubvorrichtung gemäß dem unabhängigen Anspruch gelöst.

Vorteilhafte Ausgestaltungen und Weiterbildungen der Erfindung ergeben sich aus den abhängigen Ansprüchen.

Die erfindungsgemäße Scherenhubvorrichtung baut auf dem gattungsgemäßen Stand der Technik dadurch auf, dass die Hubeinrichtung derart ausgebildet ist, dass eine Kraftrichtung einer von ihr auf ein Scherenlager aufgebrachten resultierenden Kraft in Richtung einer Verschiebungsrichtung des Tragteils verläuft. Erfindungsgemäß ist demnach vorgesehen, dass die Kraftrichtung der von der Hubeinrichtung auf die Schereneinrichtung aufgebrachten resultierenden Kraft parallel zur Verschiebungsrichtung des Tragteils verläuft. Vorzugsweise entspricht die Verschiebungsrichtung des Tragteils der Höhenrichtung der Scherenhubvorrichtung, wobei erfindungsgemäß die Kraftrichtung der von der Hubeinrichtung auf die Schereneinrichtung aufgebrachten resultierenden Kraft ebenso in Höhenrichtung der Scherenhubvorrichtung verläuft. Dadurch lässt sich der für die Verschiebung des Tragteils erforderliche Kraftaufwand deutlich verringern, wodurch die kraftaufnehmenden Komponenten der Scherenhubvorrichtung entsprechend kostengünstig dimensioniert werden können. Bei der erfindungsgemä-Ben Scherenhubvorrichtung ist vorgesehen, dass die Hubeinrichtung eine Gewindespindel aufweist, deren Längsachse in Richtung der Verschiebungsrichtung des Tragteils und/oder der Kraftrichtung verläuft, wobei die Gewindespindel in ein Gewinde eines Spindeischlittens eingreift, der in Wirkverbindung mit der Schereneinrichtung steht, Durch den Einsatz einer Gewindespindel wird eine sehr präzise Kontrolle der Hubbewegung des Tragteils ermöglicht.

Zum Zwecke einer geschützten und kompakten Anordnung sind bei der erfindungsgemäßen Scherenhubvorrichtung die Gewindespindel und der Spindelschlitten in einer sich in der Verschiebungsrichtung des Tragteils oder der Kraftrichtung erstreckenden Stützsäule des Grundrahmens gelagert. Demnach ist die Stützsäule des Grundrahmens parallel zur Verschiebungsrichtung des Tragteils oder zur Kraftrichtung ausgerichtet bzw. verläuft in Höhenrichtung der Scherenhubvorrichtung.

Zur Stabilisierung des Tragteils ist eine teleskopisch aus der Stützsäulen ausfahrbare, mit dem Tragteil gekoppelte Teleskopstange vorgesehen. Diese Teleskopstange dient zur seitlichen Stabilisierung der Scherenpaare, insbesondere bei voll ausgefahrener Hubeinrichtung bzw. bei voll ausgefahrener Schereneinrichtung, um ein Kippen der ausgefahrenen Schereneinrichtung weitgehend zu verhindern.

In diesem Zusammenhang kann die erfindungsgemäße Scherenhubvorrichtung so weitergebildet sein, dass der Spindelschlitten gelenkig mit der Schereneinrichtung verbunden ist.

Bei einer weiteren Ausgestaltung der erfindungsgemäßen Scherenhubvorrichtung kann vorgesehen sein, dass die Schereneinrichtung wenigstens ein Scherengerüst umfasst, das eine Vielzahl von Scherenarmpaaren aufweist, die jeweils durch zwei an einer Gelenkstelle gelenkig verbundene Scherenarme gebildet sind, wobei benachbarte Scherenarmpaare seriell durch Scherenlager gelenkig verbunden sind, wobei die Längsachse der Gewindespindel in Richtung einer geometrischen Mittellinie verläuft, die sich durch die Gelenkstellen der Scherenarmpaare erstreckt. Die Scherenarmpaare sind jeweils durch an einer Gelenkstelle gelenkig verbundene Scherenarme vorzugsweise derart ausgebildet, dass die gelenkig gekoppelten Scherenarme eines Scherenarmpaares in einer Stellung ein "X" ausbilden können. Vorzugsweise erstreckt sich die Längsachse der Gewindespindel parallel zu der geometrischen Mittellinie, die durch die Gelenkstellen der jeweiligen Scherenarmpaare verläuft.

Gemäß einer bevorzugten Ausführungsform der erfindungsgemäßen Scherenhubvorrichtung kann vorgesehen sein, dass der Spindelschlitten an einem der Scheren lager gelenkig mit der Schereneinrichtung verbunden ist. Die Verwendung des Scherenlagers zur Ankoppelung des Spindelschlittens erspart ein zusätzliches Anlenkungslager für den Spindelschiitten und trägt so zur Kompaktheit der gesamten Scherenhubvorrichtung bei. Über das Scherenlager wird somit die resultierende Kraft bzw. die Hubbewegung in die Scherenarme der Schereneinrichtung und somit das Tragteil eingeleitet.

Weiterhin kann die erfindungsgemäße Scherenhubvorrichtung derart verwirklicht werden, dass die Gewindespindel durch einen elektrischen oder elektromechanischen Antrieb antreibbar ist. Ein elektrischer oder elektromechanischer Antrieb ermöglicht eine besonders präzise Kontrolle der Hubbewegung.

In diesem Zusammenhang kann die erfindungsgemäße Scherenhubvorrichtung so realisiert werden, dass der elektrische oder elektromechanische Antrieb mit einer sich senkrecht zur Verschiebungsrichtung des Tragteils oder der Kraftrichtung und damit senkrecht zur Gewindespindelspindel erstreckenden Welle verbunden ist, wobei die Welle über ein Getriebe mit der Gewindespindel verbunden ist.

Gemäß einer bevorzugten Ausführungsform der erfindungsgemäßen Scherenhubvorrichtung können der elektrische oder elektromechanische Antrieb und die dem Antrieb zugeordnete Welle in einem sich senkrecht zur Verschiebungsrichtung des Tragteils oder der Kraftrichtung erstreckenden Längsholm untergebracht sein.

Ferner kann die erfindungsgemäße Scherenhubvorrichtung derart ausgestaltet werden, dass die Schereneinrichtung zwei beabstandete, in seitlichen Außenbereichen des Tragteils angeordnete, Scherenarmpaare aufweisende Scherengerüste umfasst.

Darüber hinaus kann die erfindungsgemäße Scherenhubvorrichtung so umgesetzt werden, dass sie zwei seitlich zueinander angeordnete Grundgestelle und einen Grundrahmen, der den Längsholm aufweist, umfasst.

Bei einer weiteren Ausgestaltung der erfindungsgemäßen Scherenhubvorrichtung können an dem Grundrahmen zwei zueinander beabstandete Stützsäulen gelagert sein.

Vorzugsweise ist die erfindungsgemäße Scherenhubvorrichtung als Hubgabelvorrichtung ausgebildet. In diesem Fall wird das Tragteil durch eine Hubgabel, ausgebildet. Alternativ kann die erfindungsgemäße Scherenhubvorrichtung jedoch auch mit einer Tischplatte als Tragteil verwirklicht werden.

Eine bevorzugte Ausführungsform der Erfindung wird nachfolgend anhand der Figuren beispielhaft erläutert.

Es zeigen:
Fig.1 eine Hinteransicht einer erfindungsgemäßen Scherenhubvorrichtung in einer unteren Endstellung;
Fig. 2 eine perspektivische Ansicht der erfindungsgemäßen Scherenhubvorrichtung von Fig. 1 in der unteren Endstellung;
Fig. 3 eine weitere perspektivische Ansicht der erfindungsgemäßen Scherenhubvorrichtung von Fig. 1 in der unteren Endstellung;
Fig. 4 einen vergrößerten Ausschnitt von Fig. 3;
Fig. 5 eine perspektivische Ansicht der erfindungsgemäßen Scherenhubvorrichtung von Fig. 1 in einer oberen Endstellung;
Fig. 6 einen vergrößerten Ausschnitt von Fig. 5;
Fig. 7 eine Seitenansicht der erfindungsgemäßen Scherenhubvorrichtung von Fig. 5 in der oberen Endstellung;
Fig. 8 eine perspektivische Ansicht der erfindungsgemäßen Scherenhubvorrichtung von Fig. 1 in einer Mittelstellung, die zwischen der oberen und unteren Endstellung gelegen ist;
Fig. 9 eine Seitenansicht der erfindungsgemäßen Scherenhubvorrichtung von Fig. 8 in der Mittelstellung; und
Fig. 10 eine Hinteransicht der erfindungsgemäßen Scherenhubvorrichtung von Fig. 8 in der Mittelstellung.

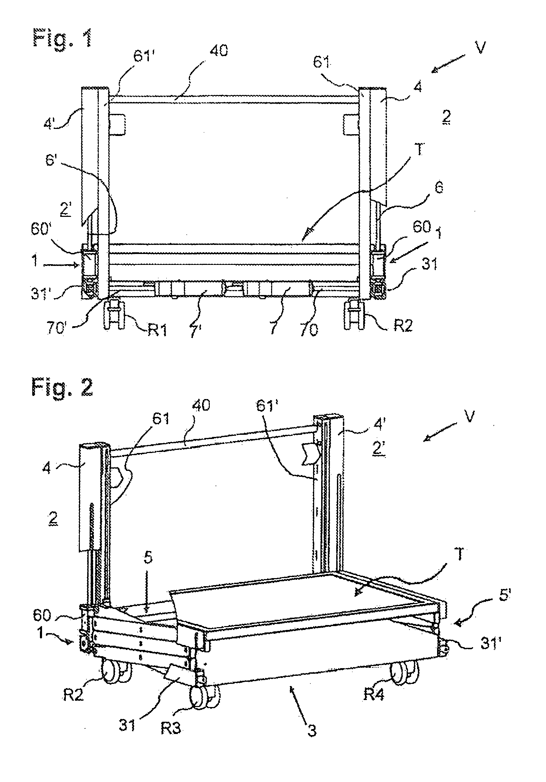

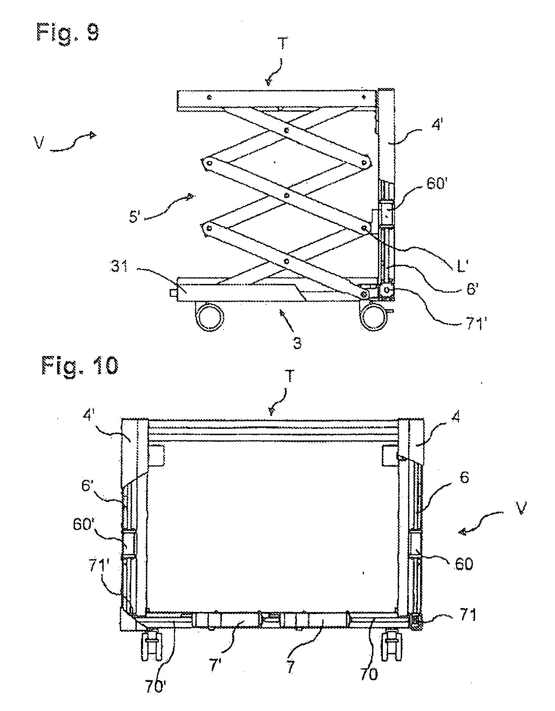

Die Fig. 1 bis 10 zeigen ein Ausführungsbeispiel der erfindungsgemäßen Scherenhubvorrichtung V, wobei die dargestellte Scherenhubvorrichtung V beispielsweise eingesetzt wird, um in Labor- und/oder Unterrichtsräumen mit Aufbauten von Versuchsanordnungen bestückte Tischplatten aus einem Aufbewahrungsmöbel zu entnehmen.

Im Folgenden wird zunächst der grundsätzliche Aufbau der für den Betrieb der erfindungsgemäßen Scherenhubvorrichtung V wesentlichen Komponenten bzw. Baugruppen beschrieben. Anschließend werden einige Komponenten bzw. Baugruppen sowie weitere Komponenten der Scherenhubvorrichtung V näher erläutert.

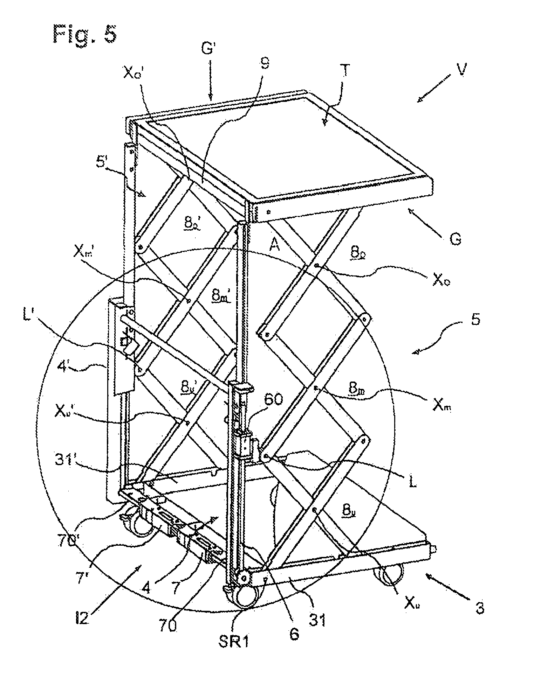

Wie insbesondere aus den Figuren 1 bis 3 ersichtlich ist, umfasst die erfindungsgemäße scherenhubvorrichtung V ein Tragteil T, welches zur Aufnahme einer Last bzw. eines Gutes dient und beispielsweise als eine Tischplatte oder als eine Hubgabel ausgebildet sein kann. Das Tragteil T ist verschiebbar durch eine Schereneinrichtung 1 gestützt, so dass die Höhe des Tragteils T durch entsprechende Betätigung der Schereneinrichtung 1 verändert werden kann. Zu diesem Zweck ist das Tragteil T mit der Schereneinrichtung 1 gekoppelt, welche im dargestellten Fall zwei Scherengerüste aufweist, die jeweils drei Scherenarmpaare umfassen, wie insbesondere aus Fig. 5 ersichtlich ist, worauf im Anschluss noch näher eingegangen wird. Um die Schereneinrichtung zur Verschiebung des Tragteils T bzw. zur Höhenverstellung des Tragteils T zu verstellen, ist die Schereneinrichtung 1 mit einer Hubeinrichtung 7, 7', 70, 70', 6, 6', 60, 60' zur Veränderung der Lage des Tragteils T gekoppelt. Die Hubeinrichtung 7, 7', 70, 70', 6, 6', 60, 60' ist dabei derart ausgebildete, dass eine Kraftrichtung einer von der Hubeinrichtung 7, 7', 70, 70', 6, 6', 60, 60' auf die Schereneinrichtung 1 aufgebrachten resultierenden Kraft in Richtung einer Verschiebungsrichtung des Tragteils T verläuft, d.h. die Kraftrichtung ist parallel zur Verschiebungsrichtung des Tragteils T.

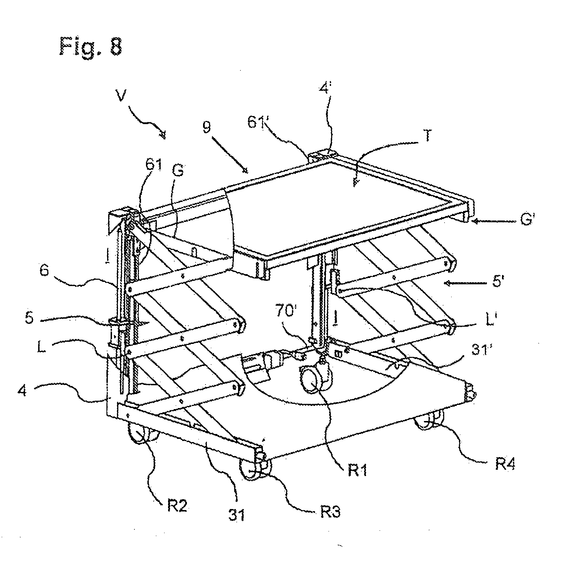

Dementsprechend lässt sich die Höhe des Tragteils stufenlos verstellen, so dass es zwischen der in den Figuren 1 bis 4 gezeigten unteren Endstellung über die in den Figuren 8 bis 10 gezeigte Mittelstellung in die in den Figuren 5 bis 7 gezeigte obere Endstellung bewegt werden kann.

Im Folgenden werden die vorstehend beschriebenen Komponenten bzw. Baugruppen sowie weitere Komponenten der erfindungsgemäßen Scherenhubvorrichtung nochmals näher erläutert.

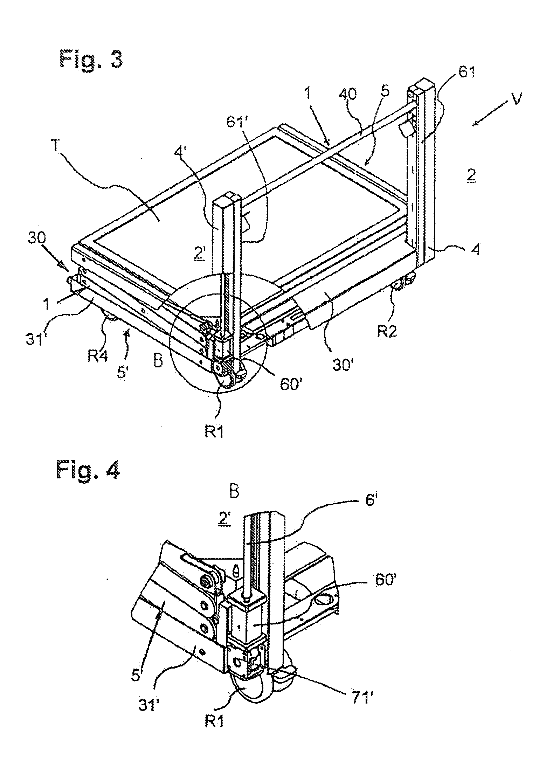

Wie aus den Figuren 1 bis 3 ersichtlich ist, umfasst die erfindungsgemäße Scherenhubvorrichtung V zwei Grundgestelle 2, 2', insbesondere ein in Fig. 2 linkes Grundgestell 2 und ein in Fig. 2 rechtes Grundgestell 2'. Weiterhin umfasst die Scherenhubvorrichtung V einen vorzugsweise rechtecksförmig ausgebildeten Grundrahmen 3, der insbesondere in Fig. 5 erkennbar ist. Die zwei Grundgestelle 2, 2' sind seitlich beabstandet angeordnet, wobei der Grundrahmen 3 die beiden Grundgestelle 2, 2' stützt, wie beispielhaft in Figur 4 für das Grundgestell 2' gezeigt ist. Die zwei Grundgestelle 2, 2' umfassen jeweils eine Stützsäule 4, 4', insbesondere die in Fig. 2 dargestellte linke Stützsäule 4 und rechte Stützsäule 4'. Wie weiterhin aus Fig. 2 ersichtlich ist, sind die linke Stützsäulen 4 und die rechte Stützsäulen 4' jeweils senkrecht zu der durch den Grundrahmen 3 definierten horizontalen geometrischen Grundebene angeordnet und dem grundsätzlichen Aufbau nach identisch ausgestaltet. Zwischen den Stützsäulen 4, 4' erstreckt sich eine horizontal angeordnete Verbindungsstrebe 40, die einerends am oberen Ende der linken Stützsäulen 4 und andererends am oberen Ende der rechten Stützsäulen 4' befestigt ist und insbesondere zur Stabilisierung der Stützsäulen 4, 4' dient.

Der Grundrahmen 3 ist, wie vorstehend erwähnt, vorzugsweise rechteckförmig ausgebildet und umfasst zwei in Längsrichtung der Scherenhubvorrichtung V angeordnete Längsholme 30, 30' und zwei senkrecht zur Längsrichtung und somit in Querrichtung der Scherenhubvorrichtung V angeordnete Querholme 31, 31'.

An jedem Eckbereich des Grundrahmens 3 ist eine auf einen Boden aufsetzende Laufrolle R1, R2, R3, R4 vorgesehen, wodurch die erfindungsgemäße Scherenhubvorrichtung V auf dem Boden verfahrbar ist.

Weiterhin umfasst die erfindungsgemäße Scherenhubvorrichtung V die vorstehend genannte Schereneinrichtung 1, welche zwei einander gegenüberliegende, in seitlichen Außenbereichen der Scherenhubvorrichtung V angeordnete, Scherenarmpaare aufweisende Scherengerüste 5, 5' umfasst, worauf im Anschluss noch näher eingegangen wird.

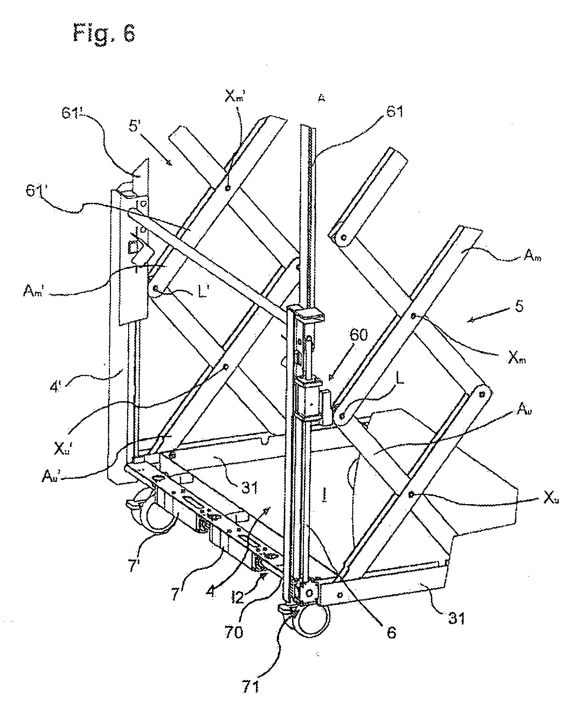

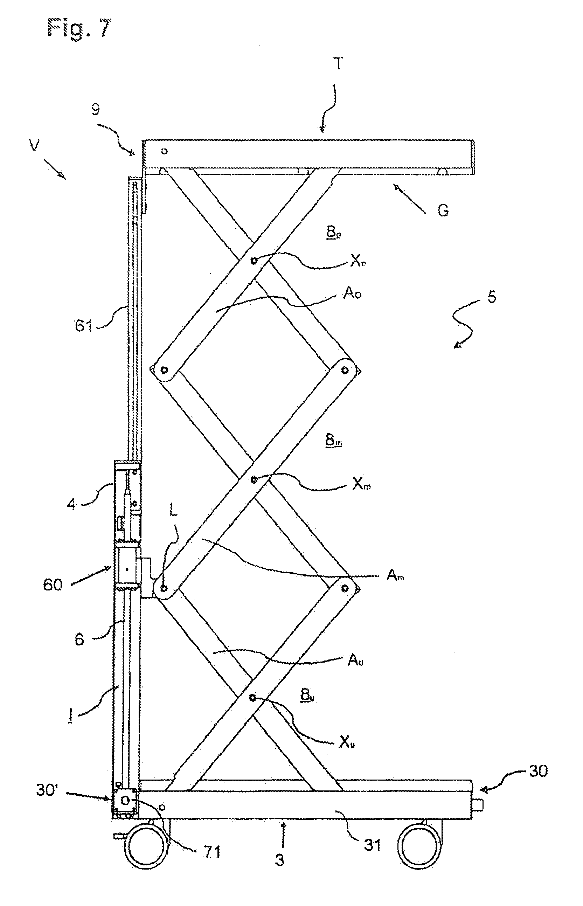

Fig. 5 zeigt eine perspektivische Ansicht der erfindungsgemäßen Scherenhubvorrichtung V von Fig. 1 in einer oberen Endstellung. Weiterhin zeigen Fig. 6 einen vergrößerten Ausschnitt von Fig. 5 und Fig. 7 eine Seitenansicht der erfindungsgemäßen Scherenhubvorrichtung V von Fig. 5 in der oberen Endstellung.

Wie insbesondere aus den Figuren 5 und 6 ersichtlich ist, sind die Stützsäulen 4, 4' (wovon nur die Stützsäulen 4' dargestellt ist und die Stützsäulen 4 ausgeblendet ist) in der Art eines Vierkantrohres ausgeführt und begrenzen jeweils einen ersten Innenraum I, I', Der ebenfalls in der Art eines Vierkantrohres ausgebildete hintere Längsholm 30' des Grundrahmens 3, der in Fig. 3 dargestellt ist und in den Figuren 5 und 6 ausgeblendet ist, begrenzt einen zweiten Innenraum 12.

Darüber hinaus umfasst die erfindungsgemäße Scherenhubvorrichtung V die vorgenannte Hubeinrichtung, mit der die Winkelstellung von Scherenarmen der Schereneinrichtung 1 zueinander verändert werden kann. Wie insbesondere in Fig. 5 und in vergrößerter Ansicht in Fig. 6 erkennbar ist, umfasst die Hubeinrichtung eine nicht in den Figuren 5 und 6 dargestellte linke Gewindespindel 6' und eine in den Figuren 5 und 6 dargestellte rechte Gewindespindel 6, denen jeweils ein Spindelschlitten 60, 60' zugeordnet ist, wobei der Spindelschlitten 60' in vergrößerter Darstellung in Fig. 4 gezeigt ist. Dabei greift jede der vertikal bzw. in Höhenrichtung der Scherenhubvorrichtung V verlaufend angeordneten Gewindespindeln 6, 6' in ein Gewinde des zugehörigen Spindelschlittens 60, 60' ein.

In jedem ersten durch die Stützsäulen 4, 4' ausgebildeten Innenraum I, I' sind jeweils ein Gewindeschlitten 60, 60' und eine zugehörige Gewindespindel 6, 6' angeordnet bzw. gelagert.

Wie insbesondere aus Fig. 6 ersichtlich ist, umfasst die Hubeinrichtung weiterhin einen linken Elektromotor 7', dem eine linke Welle 70' zugeordnet ist, und einen rechten Elektromotor 7, dem eine rechte Welle 70 zugeordnet ist. Bevorzugt werden die Elektromotoren 7, 7' synchronisiert betrieben, wobei die Scherenhubvorrichtung V jedoch je nach erforderlicher Hubleistung mit nur einem der zwei Elektromotoren 7, 7' betrieben werden kann.

Die Elektromotoren 7, 7' und die senkrecht zu den Gewindespindeln 6, 6' in Längsrichtung der Scherenhubvorrichtung V angeordneten Wellen 70, 70' sind innerhalb des zweiten Innenraums 12 angeordnet, der durch den hinteren Längsholm 30' begrenzt wird.

Als Sicherheitsvorkehrung können die Elektromotoren 7, 7' mit einer Totmann-Schaltung angesteuert werden.

Die linke Welle 70' ist über ein nicht in Fig. 6 dargestelltes linkes Getriebe 71' mit der linken Gewindespindel 6' gekoppelt. Entsprechend ist die rechte Welle 70 über ein rechtes Getriebe 71 mit der rechten Gewindespindel 6 gekoppelt, wie insbesondere aus den Figuren 6 und 7 ersichtlich ist.

Weiterhin lässt sich insbesondere der Fit. 5 entnehmen, dass das linke Scherengerüst 5' drei übereinander angeordnete Scherenarmpaare umfasst, insbesondere ein linkes unteres Scherenarmpaar 8u', ein linkes mittleres Scherenarmpaar 8m' sowie ein linkes oberes Scherenarmpaar 8o'.

Das rechte Scherengerüste 5 ist bezüglich einer geometrischen Mittelebene spiegelsymmetrisch zum linken Scherengerüste 5' ausgebildet und umfasst auf analoge Weise ein rechtes unteres Scherenarmpaar 8u, ein über letzterem angeordnetes rechtes mittleres Scherenarmpaar 8m sowie ein zuoberst angeordnetes rechtes oberes Scherenarmpaar 8o, wie beispielsweise aus den Figuren 5 und 7 ersichtlich ist.

Jedes Scherenarmpaar 8u, 8m, 8o, 8u', 8m', 8o' umfasst zwei sich kreuzende, an je einer Gelenkstelle Xu, Xm, Xo, Xu', Xm', Xo' gelenkig miteinander verbundene Scherenarme.

Die Scherenarme von übereinander angeordneten Scherenarmpaaren sind paarweise an ihren Enden durch entsprechende Scherenlager gelenkig miteinander verbunden.

Wie insbesondere in Fig. 7 gezeigt ist, sind ein rechter unterer Scherenarm Au des rechten unteren Scherenarmpaares 8u und ein rechter mittlerer Scherenarm Am des rechten mittleren Scherenarmpaares 8m an ihren spindelseitigen, also den der rechten Gewindespindel 6 zugewandten Enden, durch ein rechtes Scherenlager L gelenkig miteinander verbunden, über welches die Hubbewegung eingeleitet wird.

Auf den rechten oberen Scherenarmen Ao des rechten oberen Scherenarmpaares 8o stützt sich ein rechter Gabelarm G ab. Eine rechte Teleskopstange 61 ist durch die rechte Stützsäulen 4 geführt, beispielsweise über eine oder mehrere Führungen oder Reiter, und an einem aus der Stützsäule herausragenden Endabschnitt mit einer Zwischenstrebe 9 verbunden. Diese Zwischenstrebe 9 wird von dem Tragteil T bei der Hubbewegung mitbewegt und dient zur Stabilisierung der erfindungsgemäßen Scherenhubvorrichtung V.

Der rechte Spindelschlitten 60' ist über das rechte Scherenlager L an das rechte Scherengerüst 5 angekoppelt.

Wie insbesondere aus Fig. 5 ersichtlich ist, ist das untere Ende eines der Scherenarme des rechten unteren Scherenarmpaares 8u mit einem rechten Gelenkbolzen SR1 am rechten Querholm 31 gelenkig verbunden, wobei das untere Ende des anderen Scherenarms des rechten unteren Scherenarmpaares 8u mit nicht dargestellten rechten Stützrollen am rechten Querholm 31 abrollbar geführt ist.

Ein linker unterer Scherenarm Au' des linken unteren Scherenarmpaares 8u' und ein linker mittlerer Scherenarm Am' des linken mittleren Scherenarmpaares 8m' sind an ihren spindelseitigen, also den der linken Gewindespindel 6' zugewandten Enden, durch ein linkes Scherenlager L' gelenkig miteinander verbunden, über welches die Hubbewegung eingeleitet wird.

Auf den linken oberen Scherenarmen des linken oberen Scherenarmpaares 8o' stützt sich ein linker Gabelarm G' ab. Eine linke Teleskopstange 61' ist in der linken Stützsäule 4' geführt, beispielsweise über eine oder mehrere Führungen oder Reiter, und ist an einem aus der Stützsäule 4' herausragendem Ende mit der Zwischenstrebe 9 verbunden, wodurch eine Stabilisierung der Scherenhubvorrichtung V, wie vorstehend erwähnt ist, bewirkt wird.

Der linke Spindelschlitten 60' ist über das linke Scherenlager L' an das linke Scherengerüst 5' angekoppelt.

Ein unteres Ende eines der Scherenarme des linken unteren Scherenarmpaares 8u' ist mit einem linken Gelenkbolzen SR1' am linken Querholm 31' gelenkig verbunden, wobei ein unteres Ende des anderen der Scherenarme des linken unteren Scherenarmpaares 8u' mit linken Stützrollen am linken Querholm 31' abrollbar geführt ist.

Die jeweils parallel zu den Querholmen 31, 31' angeordneten Gabelarme G, G' sind über die parallel zu den Längsholmen 30, 30' angeordnete Zwischenstrebe 9 miteinander verbunden.

Die Scherengerüste 5, 5' spannen jeweils eine Seitenebene auf, wobei diese beiden Seitenebenen parallel zueinander verlaufen.

Im Folgenden wird die Funktionsweise der erfindungsgemäßen Scherenhubvorrichtung V beschrieben.

Wie bereits vorstehend erwähnt ist, kann das Tragteil T beliebig in dessen Höhe verstellt werden, so dass es zwischen der in den Figuren 1 bis 4 gezeigten unteren Endstellung über die in den Figuren 8 bis 10 gezeigte Mittelstellung in die in den Figuren 5 bis 7 gezeigte obere Endstellung bewegt werden kann.

Zu diesem Zweck treiben die Elektromotoren 7, 7' die ihnen jeweils zugeordnete Welle 70, 70' auf synchrone Weise an. Die Rotationsbewegung jeder Welle 70, 70' wird über das jeweilige Getriebe 71, 71' auf die entsprechenden Gewindespindeln 6, 6' übertragen, wodurch die Spindelschlitten 60, 60'- in den stützsäulen 4, 4' geführt -je nach Rotationsrichtung der Gewindespindeln 6, 6' auf- oder abbewegt werden. Die Bewegungen der Spindelschlitten 60, 60' werden über das rechte Scherenlager L' und das linke Scherenlager L auf die jeweiligen Scherengerüste 5, 5' übertragen, wodurch die Winkelstellungen der Scherenarme zueinander verändert werden, um so das Tragteil T zu heben oder zu senken bzw. in der Höhe zu verstellen.

Die starr mit den Spindelschlitten 60, 60' verbundenen Teleskopstangen 61, 61' fahren zur Verschiebung des Tragteils T teleskopisch aus den jeweiligen Stützsäulen 4, 4' aus oder ein und üben dabei eine Stabilisierungsfunktion des Tragteils T sowie der Schereneinrichtung 1 aus. Die in den Stützsäulen 4, 4' geführten Teleskopstangen 61, 61', die über die Zwischenstrebe 9 miteinander verbundenen sind, welche durch die Hubbewegung des Tragteils T mitgenommen werden, dienen somit insgesamt zur Stabilisierung der Scherenhubvorrichtung V.

Die Verstellbewegungen der beiden Scherengerüste 5, 5' werden in dieser Ausführungsform auf elektronischem Wege unter Verwendung einer elektronischen Steuerung und/oder auf mechanischem Wege miteinander synchronisiert durchgeführt.

### Bezugszeichenliste:

- 1: Schereneinrichtung
- 2: linkes Grundgestell
- 2': rechtes Grundgestell
- 3: Grundrahmen
- 4: linke Stützsäule
- 4': rechte Stützsäule
- 5: linkes Scherengerüst
- 5': rechtes Scherengerüst
- 6: linke Gewindespindel
- 6': rechte Gewindespindel
- 7: linker Elektromotor
- 7': rechter Elektromotor
- 8m: linkes mittleres Scherenarmpaar
- 8o: linkes oberes Scherenarmpaar
- 8u: linkes unteres Scherenarmpaar
- 8m': rechtes mittleres Scherenarmpaar
- 8o': rechtes oberes Scherenarmpaar
- 8u': rechtes unteres Scherenarmpaar
- 9: Zwischenstrebe
- 30: vorderer Längsholm
- 30': hinterer Längsholm
- 31: linker Querholm
- 31': rechter Querholm
- 60: Spindelschlitten
- 61: linke Teleskopstange
- 61': rechte Teleskopstange
- 70: linke Welle
- 70': rechte Welle
- 71: linkes Getriebe
- 71': rechtes Getriebe
- Am: linker mittlerer Scherenarm
- Am': rechter mittlerer Scherenarm
- Au: linker unterer Scherenarm
- Au': rechter unterer Scherenarm
- G: linker Gabelarm
- G': rechter Gabelarm
- I: linker erster Innenraum
- I': rechter erster Innenraum
- 12: zweiter Innenraum
- L: linkes Scherenlager
- L': rechtes Scherenlager
- R1, R2, R3, R4: Laufrollen
- T: Tragteil
- V: Scherenhubvorrichtung
- Xu, Xm, ...Xo': Gelenkstellen

## Patentansprüche

1. Scherenhubvorrichtung (V) mit einem verschiebbaren lastaufnehmenden Tragteil (T), einer mit dem Tragteil (T) verbundenen Schereneinrichtung (1), die mindestens zwei benachbarte Scherenarmpaare mit jeweils zwei an einer Gelenkstelle (Xu, Xm, Xo, Xu', Xm', Xo') gelenkig verbundenen Scherenarmen aufweist, wobei die benachbarten Scherenarmpaare seriell durch Scherenlager (L, L') gelenkig verbunden sind, und mit einer mit der Schereneinrichtung (1) gekoppelten Hubeinrichtung (7, 7', 70, 70', 6, 6', 60, 60') zur Verschiebung des Tragteils (T), wobei die Hubeinrichtung derart ausgebildet ist, dass eine Kraftrichtung einer von ihr auf ein Scherenlager (L, L') aufgebrachten resultierenden Kraft in Richtung einer Verschiebungsrichtung des Tragteils (T) verläuft, wobei die Hubeinrichtung eine Gewindespindel (6, 6') aufweist, deren Längsachse in Richtung der Verschiebungsrichtung des Tragteils (T) und/oder der Kraftrichtung verläuft, wobei die Gewindespindel (6, 6') in ein Gewinde eines Spindelschlittens (60, 60') eingreift, der in Wirkverbindung mit der Schereneinrichtung (1) steht, **dadurch gekennzeichnet, dass** die Gewindespindel (6, 6') und der Spindelschlitten (60, 60') in einer sich in der Verschiebungsrichtung des Tragteils (T) oder der Kraftrichtung erstreckenden Stützsäule (4, 4') gelagert sind und zur Stabilisierung des Tragteils (T) eine teleskopisch aus der Stützsäule (4, 4') ausfahrbare, mit dem Tragteil (T) gekoppelte Teleskopstange (61, 61') vorgesehen ist.

2. Scherenhubvorrichtung (V) nach Anspruch 1, **dadurch gekennzeichnet, dass** der Spindelschlitten (60, 60') gelenkig mit der Schereneinrichtung (1) verbunden ist.

3. Scherenhubvorrichtung (V) nach Anspruch 1 oder 2, **dadurch gekennzeichnet, dass** die Schereneinrichtung (1) wenigstens ein Scherengerüst (5, 5') umfasst, das eine Vielzahl von Scherenarmpaaren (8u, 8m, 8o, 8u', 8m', 8o') aufweist, die jeweils durch zwei an einer Gelenkstelle (Xu, Xm, Xo, Xu' , Xm', Xo') gelenkig verbundene Scherenarme gebildet sind, wobei benachbarte Scherenarmpaare (8u, 8m, 8o, 8u', 8m', 8o') seriell durch Scherenlager (L, L') gelenkig verbunden sind, wobei die Längsachse der Gewindespindel (6, 6') in Richtung einer geometrischen Mittellinie verläuft, die sich durch die Gelenkstellen (Xu, Xm, Xo, Xu' , Xm', Xo') der Scherenarmpaare (8u, 8m, 8o, 8u', 8m', 8o') erstreckt.

4. Scherenhubvorrichtung (V) nach Anspruch 3, **dadurch gekennzeichnet, dass** der Spindelschlitten (60, 60') an einem der Scherenlager (L, L') gelenkig mit der Schereneinrichtung (1, 1') verbunden ist.

5. Scherenhubvorrichtung (V) nach einem der Ansprüche 1 bis 4, **dadurch gekennzeichnet, dass** die Gewindespindel (6, 6') durch einen elektrischen oder elektromechanischen Antrieb (7, 7') antreibbar ist.

6. Scherenhubvorrichtung (V) nach Anspruch 5, **dadurch gekennzeichnet, dass** der elektrische oder elektromechanische Antrieb (7, 7') mit einer sich senkrecht zur Verschiebungsrichtung des Tragteils (T) oder der Kraftrichtung erstreckenden Welle (70, 70') verbunden ist, wobei die Welle (70, 70') über ein Getriebe (71, 71') mit der Gewindespindel (6, 6') verbunden ist.

7. Scherenhubvorrichtung (V) nach Anspruch 6, **dadurch gekennzeichnet, dass** der elektrische oder elektromechanische Antrieb (7, 7') und die dem Antrieb (7, 7') zugeordnete Welle (70, 70') in einem sich senkrecht zur Verschiebungsrichtung des Tragteils oder der Kraftrichtung erstreckenden Längsholm (30, 30') untergebracht sind.

8. Scherenhubvorrichtung (V) nach einem der vorhergehenden Ansprüche, **dadurch gekennzeichnet, dass** die Schereneinrichtung (1) zwei beabstandete, in seitlichen Außenbereichen des Tragteils (T) angeordnete, Scherenarmpaare aufweisende Scherengerüste (5, 5') umfasst.

9. Scherenhubvorrichtung (V) nach Anspruch 7 oder 8, **dadurch gekennzeichnet, dass** das Tragteil zwei seitlich zueinander angeordnete Grundgestelle (2) und einen Grundrahmen (3) umfasst, der den Längsholm (30, 30') aufweist.

10. Scherenhubvorrichtung (V) nach Anspruch 9, **dadurch gekennzeichnet, dass** an dem Grundrahmen (3) zwei zueinander beabstandete Stützsäulen (4, 4') gelagert sind.

11. Scherenhubvorrichtung (V) nach einem der vorhergehenden Ansprüche, **dadurch gekennzeichnet, dass** die Scherenhubvorrichtung als Hubgabelvorrichtung ausgebildet ist.

## Claims

1. A scissor lifting device (V) with a shiftable load-absorbing support part (T), a scissor device (1) which is connected to the support part (T), which comprises at least two adjacent scissor arm pairs with two scissor arms each hinged to a joint (Xu, Xm, Xo, Xu', Xm', Xo'), wherein the adjacent scissor arm pairs are serially hinged through scissor bearings (L, L'), and are formed with a lifting device (7, 7', 70, 70', 6, 6', 60, 60') which is coupled to the scissor device (1) for shifting the support part (T), wherein the lifting device is designed in such a manner that a force direction of a resultant force applied by said lifting device onto a scissor bearing (L, L') runs in the direction of a shifting direction of the support part (T), wherein the lifting device comprises a threaded spindle (6, 6'), the longitudinal axis of which runs in the direction of the shifting direction of the support part (T) and/or the force direction, wherein the spindle (6, 6') engages into a thread of a spindle slide (60, 60'), which is operationally connected to the scissor device (1), **characterized in that** the threaded spindle (6, 6') and the spindle slide (60, 60') are mounted in a support column (4, 4') extending in the shifting direction of the support part (T) and/or the force direction and for stabilising the support part (T) a telescopic rod (61, 61') which can be telescopically extended from the support column (4, 4') and is coupled to the support part (T) is provided.

2. The scissor lifting device (V) according to claim 1, **characterized in that** the spindle slide (60, 60') is hinged to the scissor device (1).

3. The scissor lifting device (V) according to claim 1 or 2, **characterized in that** the scissor device (1) comprises at least one scissor framework (5, 5'), which comprises a multiplicity of scissor arm pairs (8u, 8m, 8o, 8u', 8m', 8o'), which are each formed by two scissor arms which are hinged to a joint (Xu, Xm, Xo, Xu', Xm', Xo'), wherein adjacent scissor arm pairs (8u,8m, 8o, 8u', 8m', 8o') are serially hinged through scissor bearings (L, L'), wherein the longitudinal axis of the threaded spindle (6, 6') runs in the direction of a geometrical centre line, which extends through the joints (Xu, Xm, Xo, Xu', Xm', Xo') of the scissor arm pairs (8u, 8m, 8o, 8u', 8m', 8o').

4. The scissor lifting device (V) according to claim 3, **characterized in that** the spindle slide (60, 60') is hinged to the scissor device (1, 1') on one of the scissor bearings (L, L').

5. The scissor lifting device (V) according to claim 1 to 4, **characterized in that** the threaded spindle (6, 6') can be driven by an electric or electromechanical drive (7, 7').

6. The scissor lifting device (V) according to claim 5, **characterized in that** the electric or electromechanical drive (7, 7') is connected to a shaft (70, 70') which extends perpendicularly to the shifting direction of the support part (T) or the force direction, wherein the shaft (70, 70') is connected to the threaded spindle (6, 6') via a gearing (71, 71').

7. The scissor lifting device (V) according to claim 6, **characterized in that** the electric or electromechanical drive (7, 7') and the shaft (70, 70') which is assigned to the drive (7, 7') are accommodated in a longitudinal bar (30, 30') which extends perpendicularly to the shifting direction of the support part or the force direction.

8. The scissor lifting device (V) according to any one of the preceding claims, **characterized in that** the scissor device (1) comprises two spaced scissor frameworks (5, 5') comprising scissor arm pairs which are arranged in lateral outer regions of the support part (T).

9. The scissor lifting device (V) according to claim 7 or 8, **characterized in that** the support part comprises two base frames (2) which are arranged laterally with respect to one another and a base frame (3) which comprises the longitudinal bar (30, 30').

10. The scissor lifting device (V) according to claim 9, **characterized in that** two support columns (4, 4') which are spaced from one another are mounted on the base frame (3).

11. The scissor lifting device (V) according to any one of the preceding claims, **characterized in that** the scissor lifting device is formed as a lifting fork device.

## Revendications

1. Dispositif de levage en ciseaux (V) avec une partie de support mobile porteuse de charge (T), un dispositif de ciseaux (1) relié à la partie de support (T), qui présente au moins deux paires de bras de ciseaux voisines avec chaque fois deux bras de ciseaux reliés de façon articulée en un point d'articulation (Xu, Xm, Xo, Xu', Xm', Xo'), dans lequel les paires de bras de ciseaux voisines sont reliées de façon articulée en série par des paliers de ciseaux (L, L'), et avec un dispositif de levage (7, 7', 70, 70', 6, 6', 60, 60') couplé au dispositif de ciseaux (1) pour le déplacement de la partie de support (T), dans lequel le dispositif de levage est réalisé de telle manière qu'une direction d'une force résultante appliquée par celui-ci à un palier de ciseaux (L, L') s'étende selon une direction de déplacement de la partie de support (T), dans lequel le dispositif de levage présente une broche filetée (6, 6'), dont l'axe longitudinal s'étend selon la direction de déplacement de la partie de support (T) et/ou la direction de la force, dans lequel la broche filetée (6, 6') s'engage dans un filet d'un chariot de broche (60, 60'), qui est en liaison active avec le dispositif de ciseaux (1), **caractérisé en ce que** la broche filetée (6, 6') et le chariot de broche (60, 60') sont montés dans une colonne d'appui (4, 4') qui s'étend selon la direction de déplacement de la partie de support (T) ou selon la direction de la force et **en ce qu'**il est prévu, pour la stabilisation de la partie de support (T), une tige télescopique (61, 61') pouvant être étendue de façon télescopique hors de la colonne d'appui (4, 4') et couplée à la partie de support (T).

2. Dispositif de levage en ciseaux (V) selon la revendication 1, **caractérisé en ce que** le chariot de broche (60, 60') est relié de façon articulée au dispositif de ciseaux (1).

3. Dispositif de levage en ciseaux (V) selon la revendication 1 ou 2, **caractérisé en ce que** le dispositif de ciseaux (1) comprend au moins une structure de ciseaux (5, 5'), qui présente une multiplicité de paires de bras de ciseaux (8u, 8m, 8o, 8u', 8m', 8o'), qui sont formées respectivement par deux bras de ciseaux reliés de façon articulée en un point d'articulation (Xu, Xm, Xo, Xu', Xm', Xo'), dans lequel des paires de bras de ciseaux voisines (8u, 8m, 8o, 8u', 8m', 8o') sont reliées de façon articulée en série par des paliers de ciseaux (L, L'), dans lequel l'axe longitudinal de la broche filetée (6, 6') s'étend suivant la direction d'une ligne centrale géométrique qui passe par les points d'articulation (Xu, Xm, Xo, Xu', Xm', Xo') des paires de bras de ciseaux (8u, 8m, 8o, 8u', 8m', 8o').

4. Dispositif de levage en ciseaux (V) selon la revendication 3, **caractérisé en ce que** le chariot de broche (60, 60') est relié au dispositif de ciseaux (1, 1') de façon articulée en un des paliers de ciseaux (L, L').

5. Dispositif de levage en ciseaux (V) selon l'une quelconque des revendications 1 à 4, **caractérisé en ce que** la broche filetée (6, 6') peut être entraînée par un entraînement électrique ou électromécanique (7,7').

6. Dispositif de levage en ciseaux (V) selon la revendication 5, **caractérisé en ce que** l'entraînement électrique ou électromécanique (7, 7') est relié à un arbre (70, 70') s'étendant perpendiculairement à la direction de déplacement de la partie de support (T) ou à la direction de la force, dans lequel l'arbre (70, 70') est relié à la broche filetée (6, 6') par un engrenage (71, 71').

7. Dispositif de levage en ciseaux (V) selon la revendication 6, **caractérisé en ce que** l'entraînement électrique ou électromécanique (7, 7') et l'arbre (70, 70') associé à l'entraînement (7, 7') sont installés dans un longeron (30, 30') s'étendant perpendiculairement à la direction de déplacement de la partie de support ou à la direction de la force.

8. Dispositif de levage en ciseaux (V) selon l'une quelconque des revendications précédentes, **caractérisé en ce que** le dispositif de ciseaux (1) comprend deux structures de ciseaux (5, 5') espacées, disposées dans des zones extérieures latérales de la partie de support (T) et présentant des paires de bras de ciseaux.

9. Dispositif de levage en ciseaux (V) selon la revendication 7 ou 8, **caractérisé en ce que** la partie de support comprend deux structures de base (2) disposées l'une à côté de l'autre et un cadre de base (3), qui présente le longeron (30, 30').

10. Dispositif de levage en ciseaux (V) selon l'une quelconque des revendications 1 à 9, **caractérisé en ce que** deux colonnes d'appui (4, 4') espacées l'une de l'autre sont montées sur le cadre de base (3).

11. Dispositif de levage en ciseaux (V) selon l'une quelconque des revendications précédentes, **caractérisé en ce que** le dispositif de levage en ciseaux est réalisé sous la forme d'un dispositif à fourche de levage.
